# EUROPÄISCHE PATENTSCHRIFT

(11) **EP 0 523 518 B1**
(45) Veröffentlichungstag und Bekanntmachung des Hinweises auf die Patenterteilung: **23.08.1995**
(21) Anmeldenummer: 92111484.9
(22) Anmeldetag: 07.07.1992
(51) Int. Cl.: F16L 23/028

(54) **Flanschring**
Flange ring
Anneau de bride

(30) Priorität: 18.07.1991 DE 4123806
(43) Veröffentlichungstag der Anmeldung: 20.01.1993
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Cohausz & Florack Patentanwälte

(56) Entgegenhaltungen:
- WO-A-86/00971
- DE-A- 2 529 138
- US-A- 3 515 416
- US-A- 3 895 833

## Beschreibung

Die Erfindung betrifft einen Flanschring, der längs einer in Achsrichtung verlaufenden Ebene in Zwei gleiche Hälften geteilt ist und bei dem im Bereich der beiden Stoßstellen jede Flanschhälte einen Riegel an der einen und eine Tasche an der anderen Stoßstelle aufweist derart, daß jeweils ein Riegel an einer Flanschhälfte formschlüssig in die Tasche der anderen Flanschhälfte derart eingreift, daß ein Trennen der Flanschhälften nach dem Zusammenstecken bei ebenem Flanschring in radialer Richtung nicht möglich ist. Der Flanschring hat Löcher für den Druchtritt der Befestigungsschrauben in beiden Flanschhälften, die bei Zusammengesetzten Flanschhälften fluchten. Solche Flanschringe sind z.B. aus der US-A-3 515 416 bekannt.

Der Erfindung liegt nun die Aufgabe zugrunde, einen Flanschring der eingangs genannten Gattung dahingehend zu verbessern, daß seine Handhabbarkeit erleichtert wird.

Zur Lösung dieser Aufgabe wird bei dem gattungsgemäßen Flanschring erfindungsgemäß vorgeschlagen, daß der Riegel mit einer Nase eine entsprechend geformte Ausnehmung in der Tasche der anderen Flanschhälfte derart hintergreift, daß ein Zusammenfügen der Flanschhälften im geknickten Zustand erfolgt.

Dadurch, daß der Flanschring in zwei gleiche Hälften mittengeteilt ist, entstehen zwei spiegelbildlich gleiche Flanschringhälften, und die Teilungsebene liegt dann in einer Axialebene. Der Riegel soll erfindungsgemäß die Tasche formschlüssig hintergreifen derart, daß ein Zusammenfügen der Flanschhälften im geknickten Zustand erfolgt, ein Trennen der Flanschhälften nach dem Zusammenstecken bei ebenem Flanschring in radialer Richtung jedoch nicht möglich ist. Damit der Riegel die Tasche formschlüssig hintergreifen kann, müssen die beiden Flanschringhälften im geknickten Zustand ineinandergesteckt und dann in die gemeinsame Flanschringebene gekippt werden, wobei dann der Hintergriff des Riegels in der Tasche zur Wirkung kommt und ein radiales Trennen der Flanschringhälften verhindert wird. Der Flanschring kann nun durch Drehen auf dem Rohr in die Befestigungsposition ausgerichtet werden. Die Befestigungsschrauben werden wie üblich durch die Schraubenlöcher im Flanschring hindurchgesteckt und angezogen. Dabei verhält sich der Flanschring wie ein einstückiger Ring, ist also ebenso gut handhabbar und hat gleich hohe Stabilität.

Der Riegel hat bevorzugt eine oder auch mehrere Nasen, die in entsprechend geformte Ausnehmungen in der anderen Flanschringhälfte eingreifen.

Nach einer weiteren vorteilhaften Ausgestaltung des erfindungsgemäßen Flanschrings kann die Tasche durch einen radial verlaufenden Bügel gebildet sein, welcher durch den Riegel hintergriffen wird. Dabei läßt sich der Bügel bevorzugt durch zwei parallele Einschnitte in der Flanschhälfte und Herausdrücken des von den Einschnitten begrenzten Stegs unter Bildung einer Einschuböffnung für den Riegel erzeugen. Diese Ausführung empfiehlt sich für dünnwandige Blechringe.

Bei schwererer Gelenkschmiedeausführung wird die Tasche und der Riegel am zweckmäßigsten beim Schmieden an- bzw. eingeformt. Der Bügel kann bei dünneren Flanschabmessungen auch durch eine aufgeschweißte Lasche gebildet werden, wie dies im einzelnen anhand eines in der Zeichnung dargestellten Ausführungsbeispiels näher erläutert wird.

Bei dem erfindungsgemäßen Flanschring wird es ferner bevorzugt, daß mindestens zwei der Löcher für den Durchtritt der Befestigungsschrauben in jeder Flanschhälfte mit zwei Löchern in der anderen Flanschhälfte fluchten, wenn die Flanschhälften zu dem geschlossenen Flanschring zusammengesteckt sind. Wenn dann Befestigungsschrauben durch diese fluchtenden Löcher hindurchgesteckt werden, werden die beiden Flanschhälften mittels der Schraube miteinander verbunden. Ohne die Schrauben zu lösen, können die Flanschhälften nicht mehr voneinander getrennt werden. Auf diese Weise kann ein doppelter Formschluß erreicht werden, nämlich einmal der durch den Eingriff des Riegels in die Tasche und zum anderen der durch die Schrauben erzielte.

Nach dem Lösen einer Flanschverbindung, die unter Verwendung erfindungsgemäßer Flanschringe hergestellt worden ist, kann der Flansch einfach vom Rohr entfernt werden. Dazu werden die beiden Flanschringhälften auseinandergezogen, wobei der Riegel außer Eingriff mit der Tasche kommt. Dabei muß das Rohr seine Lage nicht verändern.

Üblicherweise sind Losflansche beim Transport eines Rohrleitungsabschnitts bereits über das Rohr geschoben. Das führt häufig zu Transportschäden. Der Flanschring kann auf dem Rohrleitungsabschnitt wandern und das Rohr verkratzen oder durch Knicken Rillen eindrücken.

Er kann beim Absetzen des Rohrleitungsabschnitts auf dem Boden aber auch selbst verbogen oder beschädigt werden. Die erfindungsgemäße Lösung ermöglicht es, den Rohrleitungsabschnitt ohne aufgesetzten Flanschring zu transportieren und den Flanschring erst am Einsatzort anzubringen. Dadurch können Transportschäden wirksam vermieden werden. Darüber hinaus lassen sich die Rohrleitungsabschnitte beim Transport auch dichter stapeln, weil nicht mehr der Flanschring mit seinem größten Durchmesser den Abstand zwischen gestapelten Rohrleitungsabschnitten bestimmt sondern der an ihren Enden vorgesehene Bund, der einen kleineren Durchmesser hat als der Flanschring.

Durch das erwähnte Zusammenstecken der beiden Flanschringhälften läßt sich der erfindungsgemäße Flanschring zudem bei der Montage und Demontage leicht handhaben und hat die gleiche Stabilität wie ein einstückiger Flansch.

Anhand der in der Zeichnung dargestellten Aufsführungsbeispiele wird die Erfindung näher erläutert.
Es zeigen:
- Fig. 1: die Ansicht eines zweigeteilten Flanschrings,
- Fig. 2: den Längsschnitt A - B der Flanschverbindung aus Fig. 1,
- Fig. 3: den Schnitt E - F aus Fig. 1 in der zur Montage bereiten Stellung,
- Fig. 4: in einer abgeknickten Zwischenstellung während der Montage oder Demontage und
- Fig. 5: in einer Stellung, in der die beiden Flanschringhälften in abgeknickter Stellung kurz vor dem Eingriff sind,
- Fig. 6: eine Ansicht zweier spiegelbildlich gleicher Flanschringhälften in voneinander entfernter Lage,
- Fig. 7: die Ansicht eines Flansches aus zwei Flanschringhälften in zusammengesetzter Lage ähnlich der der Fig. 6,
- Fig. 8: einen Schnitt G - H aus Fig. 7,
- Fig. 9: eine weitere Ausführungsform eines Flanschrings gemäß der Erfindung in Ansicht,
- Fig. 10: den Schnitt M - N aus Fig. 9 und
- Fig. 11: den Schnitt O - P aus Fig. 9.
- Fig. 12: zeigt ein weiteres Ausführungsbeispiel eines Flanschrings gemäß der Erfindung in Ansicht und
- Fig. 13: einen Schnitt längs der Linie K - L aus Fig. 12.

Gleiche Teile sind in den verschiedenen Abbildungen mit denselben Bezugszeichen versehen.

Bei den in der Zeichnung dargestellten Ausführungsbeispielen besteht der Flanschring 1 aus zwei spiegelbildlich gleichen Flanschhälften 1a, 1b. Die Teilungsebene T des Flanschrings 1 verläuft in einer Axialebene, so daß jede Flanschhälfte 1a, 1b eine Ringhälfte bildet.

Jede Flanschhälfte 1a, 1b weist Löcher 2 für den Durchtritt von Befestigungsschrauben 3 auf. Zwischen den Löchern 2 können Versteifungssicken 4 gebildet sein.

Der lose Flanschring 1 legt sich von hinten gegen den an den Enden des Rohres 6 gebildeten Ringbund 5 an.

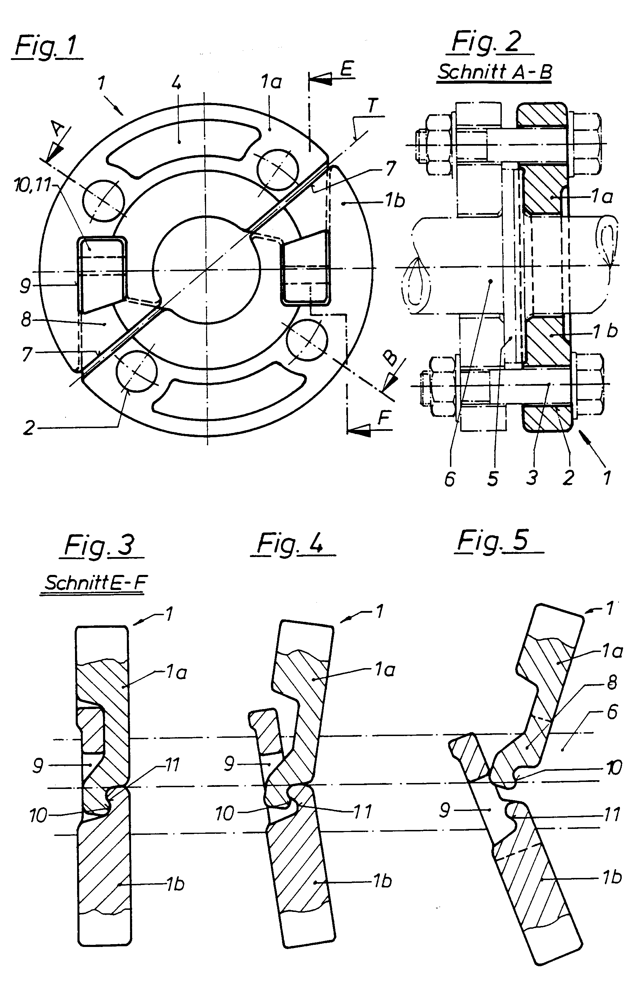

Jede Flanschhälfte 1a, 1b weist an einer Stoßstelle 7 zur anderen Flanschhälfte 1a, 1b einen Riegel 8 und an der anderen Stoßstelle 7 eine Tasche 9 auf. Die Taschen sind der Form des Riegels entsprechend ausgeformt. Jeder Riegel 8 greift also beim Fügen des Flanschrings 1 in die Tasche 9 der gegenüberliegenden Flanschhälfte 1a, 1b ein, wie am besten aus Fig. 1 ersichtlich ist. Hierdurch werden die Flanschhälften 1a, 1b miteinander zum Flanschring 1 verbunden. Sie bilden also im gefügten Zustand eine Baueinheit und stabilisieren den Flanschring 1 in der Flanschebene.

Um zu verhindern, daß die beiden Flanschhälften 1a, 1b nach dem Fügen in radialer Richtung ohne weiteres auseinandergezogen werden können, sind sie verschränkt. Dazu hat der Riegel 8 eine Nase 10, mit der er in eine entsprechende Ausnehmung 11 innerhalb der Tasche 9 eingreift, wenn die beiden Flanschhälften 1a, 1b gemäß Fig. 3 in einer Ebene liegen. Man kann diese Verbindung auch als hakenartigen Eingriff bezeichnen.

Montage und Demontage der Flanschhälften 1a, 1b wird nur durch Knicken der beiden Flanschhälften gegeneinander ermöglicht, wie die Fig. 4 und 5 deutlich machen. Zunächst werden bei der Montage die Flanschhälften 1a, 1b gemäß Fig. 5 aufeinanderzu bewegt, der Riegel 8 in die Öffnung der Tasche 9 der gegenüberliegenden Flanschhälfte 1b eingeführt, und anschließend werden die beiden Flanschhälften 1a, 1b in die Flanschebene gekippt. Fig. 4 zeigt hierfür eine Zwischenstellung und Fig. 3 die Endstellung. In umgekehrter Reihenfolge, ausgehend von Fig. 3 über Fig. 4 bis Fig. 5 erfolgt die Demontage der Flanschhälften 1a, 1b.

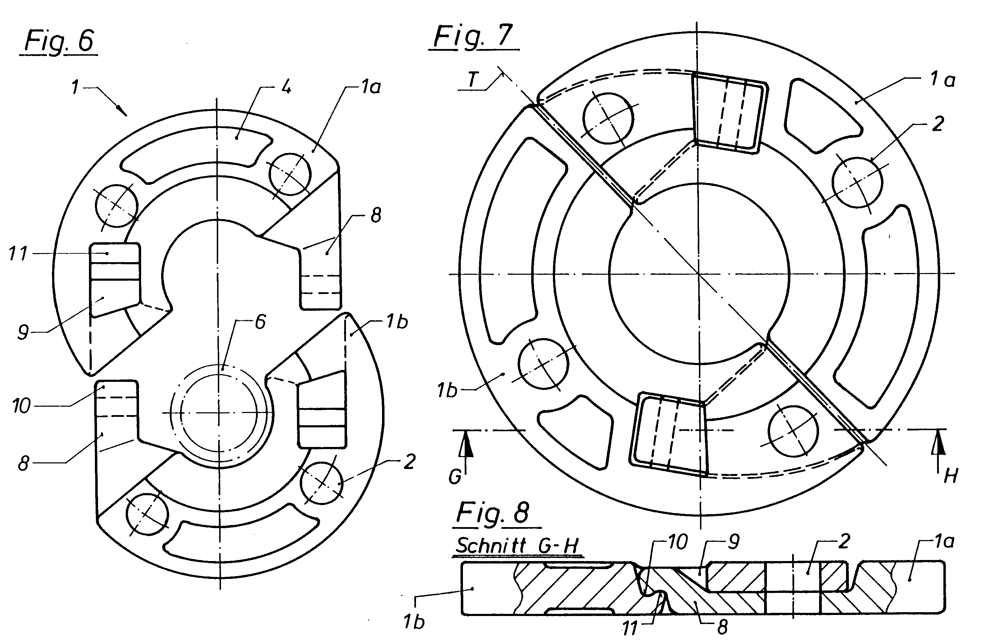

Die Ausführung gemäß Fig. 7 und 8 unterscheidet sich von der gemäß den Fig. 1 bis 6 durch die Form der Riegel, die Lage der Taschen und dadurch, daß zwei diametral gegenüberliegende Löcher 2 im Bereich der Riegel 8 und Tasche 9 fluchten. Die beiden Flanschhälften (1a, 1b) überlappen sich durch den Riegel 8 soweit, daß im Überlappungsbereich ein Loch in beiden Flanschhälften vorgesehen werden kann. Dadurch wird es nach dem Durchstecken der Befestigungsschrauben 3 durch diese Löcher 2 nicht mehr möglich, die beiden Flanschhälften 1a, 1b voneinander zu trennen.

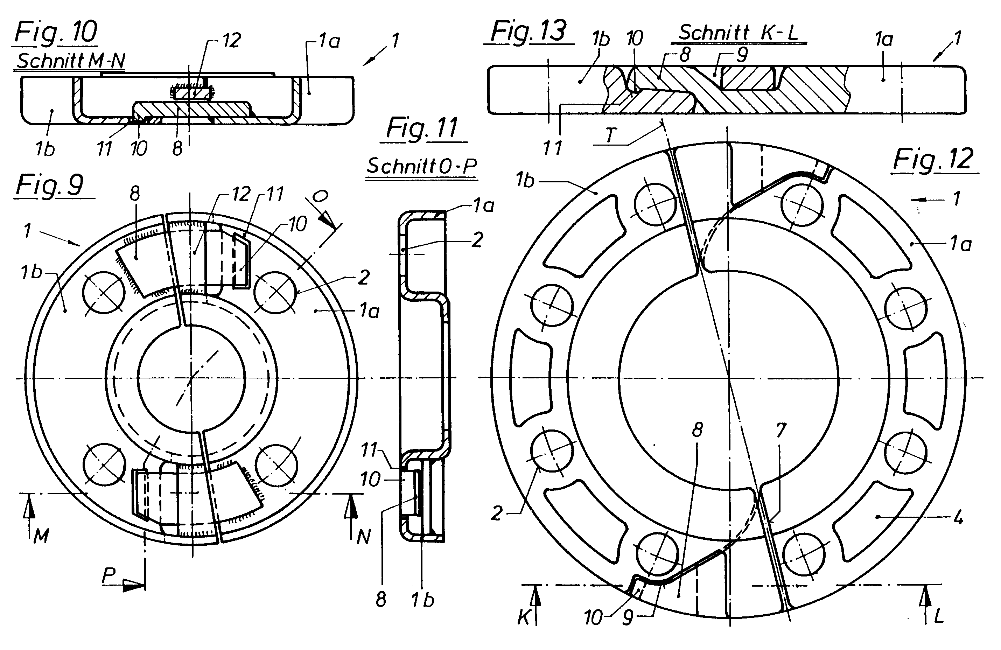

In den Fig. 9 bis 11 ist ein Preßflansch dargestellt, bei dem der Riegel 8 angeschweißt ist. Die Tasche wird durch den Bügel 12 gebildet, der an der jeweils anderen Flanschhälfte 1a, 1b angeschweißt ist. Die Ausnehmung 11, in die der Riegel 8 mit der Nase 10 eingreift, ist in Form eines Ausschnitts in der Ebene der Flanschhälfte 1a, 1b gebildet.

Bei der Ausführung des Flanschrings 1 gemäß den Fig. 12 und 13 reichen die Riegel 8 und Taschen 9 bis an die Peripherie des Flanschrings 1.

## Patentansprüche

1. Flanschring, der längs einer in Achsrichtung verlaufenden Ebene in zwei gleiche Hälften geteilt ist und bei dem im Bereich der beiden Stoßstellen jede Flanschhälte einen Riegel an der einen und eine Tasche an der anderen Stoßstelle aufweist derart, daS jeweils ein Riegel an einer Flanschhälfte formschlüssig in die Tasche der anderen Flanschhälfte derart eingreift, daß ein Trennen der Flanschhälften nach dem Zusammenstecken bei ebenem Flanschring in radialer Richtung nicht möglich ist, und der Löcher für den Durchtritt der Befestigungsschrauben in beiden Flanschhälften hat, die bei zusammengesetzten Flanschhälften fluchten,
**dadurch gekennzeichnet**, daß der Riegel mit einer Nase (10) eine entsprechend geformte Ausnehmung (11)in der Tasche (9) der anderen Flanschhälfte (1a, 1b) derart hintergreift, daß ein Zusammenfügen der Flanschhälften im geknickten Zustand erfolgt.

2. Flanschring nach Anspruch 1,
**dadurch gekennzeichnet**, daß die Tasche (9) durch einen radial verlaufenden Bügel (12) gebildet ist, welcher durch den Riegen (8) hintergriffen wird.

3. Flanschring nach Anspruch 2,
**dadurch gekennzeichnet**, daß der Bügel (12) durch zwei parallele Einschnitte in der Flanschhälfte (1a, 1b) und Herausdrücken unter Bildung einer Einschuböffnung für den Riegel (8) gebildet ist.

4. Flanschring nach einem der Ansprüche 1 bis 3,
**dadurch gekennzeichnet,** daß mindestens zwei der Löcher (2) für den Durchtritt der Befestigungsschrauben (3) in jeder Flanschhälfte (1a,1b) bei zusammengesetzten Flanschhälften mit zwei Löchern in der anderen Flanschhälfte im Bereich der Riegel (8) fluchten.

## Claims

1. A flange ring which is divided along a plane extending in the axial direction into two equal halves, wherein each flange half so has a bolt at one joint area and a pocket at the other that in each case a bolt on one flange half so engages positively in the pocket of the other flange half that when the flange halves have been assembled together they cannot be separated in the radial direction with the flange ring flat, the two halves of the flange ring being formed for the insertion of the attaching screws with holes which are aligned when the flange halves are assembled together, characterized in that the bolt so engages by a lug (10) behind a correspondingly shaped recess (11) in the pocket (9) of the other flange half (1a, 1b) that the flange halves are joined together in the bent state.

2. A flange ring according to claim 1, characterized in that the pocket (9) is formed by a radially extending bowed member (12) behind which the bolt (8) engages.

3. A flange ring according to claim 2, characterized in that the bowed member (12) is formed by two parallel incisions in the flange half (1a, 1b) and forcing-out, with the formation of an insertion opening for the bolt (8).

4. A flange ring according to one of claims 1 to 3, characterized in that at least two of the holes (2) for the insertion of the attaching screws (3) in each flange half (1a, 1b) are aligned with two holes in the other flange half in the zone of the bolts (8) when the flange halves are assembled together.

## Revendications

1. Collier de bridage, qui est divisé en deux moitiés identiques le long d'un plan s'étendant en direction axiale et dont chaque moitié présente un élément de verrouillage sur une des deux zones de joint et une poche sur l'autre zone de joint, de telle sorte que l'élément de verrouillage de chacune des moitiés de collier s'engage avec complémentarité de forme dans la poche de l'autre moitié de collier de telle façon qu'une fois assemblées, le collier de bridage étant plan, les deux moitiés ne peuvent pas être séparées en direction radiale, et qui possède dans ses deux moitiés de collier des trous pour le passage des vis de fixation qui sont alignés lorsque les moitiés sont assemblées, **caractérisé** en ce que l'élément de verrouillage, par un ergot (10), engage par l'arrière un évidement (11) de forme correspondante dans la poche (9) de l'autre moitié de collier (1a, 1b) de telle sorte que les moitiés de collier sont assemblées à l'état infléchi.

2. Collier de bridage selon la revendication 1, **caractérisé** en ce que la poche (9) est formée par un étrier (12) s'étendant radialement, qui est engagé par l'arrière par l'élément de verrouillage (8).

3. Collier de bridage selon la revendication 2, **caractérisé** en ce que l'étrier (12) est formé par deux entailles parallèles dans la moitié de collier (1a, 1b) et repoussage en formant une ouverture d'enfilage pour l'élément de verrouillage (8).

4. Collier de bridage selon l'une des revendications 1 à 3, **caractérisé** en ce qu'au moins deux des trous (2) prévus dans chaque moitié de collier (1a, 1b) pour le passage des vis de fixation sont alignés, lorsque les moitiés de collier sont assemblées, avec deux trous prévus dans l'autre moitié de collier dans la région des éléments de verrouillage (8).
